# EUROPEAN PATENT SPECIFICATION

(11) **EP 0 398 625 B1**
(45) Date of publication and mention of the grant of the patent: **02.02.1994**
(21) Application number: 90305195.1
(22) Date of filing: 15.05.1990
(51) Int. Cl.: G01N 27/409

(54) **Gas sensor**
Gassensor
Senseur de gaz

(30) Priority: 15.05.1989 JP 55574/89
(43) Date of publication of application: 22.11.1990
(73) Proprietor: NGK INSULATORS, LTD., Nagoya City Aichi Pref. (JP)
(72) Inventor: Kato, Nobuhide, Kanie-Cho, Ama-Gun, Aichi-Pref. (JP); Katsu, Masanori, Mizuho-Ku, Nagoya City, Aichi Pref. (JP)
(74) Representative: Paget, Hugh Charles Edward

(56) References cited:
- EP-A- 0 087 626
- EP-A- 0 292 144
- DE-A- 3 410 122
- US-A- 4 784 743

## Description

The present invention relates to an improvement of a gas sensor, e.g. for oxygen, comprising electrodes, a sensor element which for example generates an electromotive force or which changes its electric resistance value between the electrodes depending on the concentration of a gas to be measured, electrode terminals arranged on the sensor element and connected to the electrodes, and a metallic accommodating member accommodating the sensor element.

As shown in partial cross-section in Fig. 2a of the accompanying drawings, heretofore (see for example US-A-4,784,743), an oxygen sensor 20 has ceramic powder 30 filled and compressed between a metallic cap 10 and a sensor element 12, and the compressed ceramic powder 30 fixes the sensor element 12 and separates air from the gas to be measured, if air is used as a standard oxygen atmosphere for the sensor element 12.

The cap 10 has a rubber plug 14 at its upper open end portion opposite to a housing 4 for receiving lead wires 13 therethrough. The plug 14 is fixed in position by caulking the cap 10 to seal the cap 10. As used in this specification, "caulking" means the action of tightening by mechanically compressing the cap radially inwardly, for example by use of a jig comprising a plurality of peripheral segments which may be forced together to compress and tighten the cap which is placed in the central region defined by the segments. Female contacts 15 are arranged at the end of the lead wires 13 for electrically connecting an electrode terminal 17 of the sensor element 12 and the female contact 15 in a ceramic housing 16.

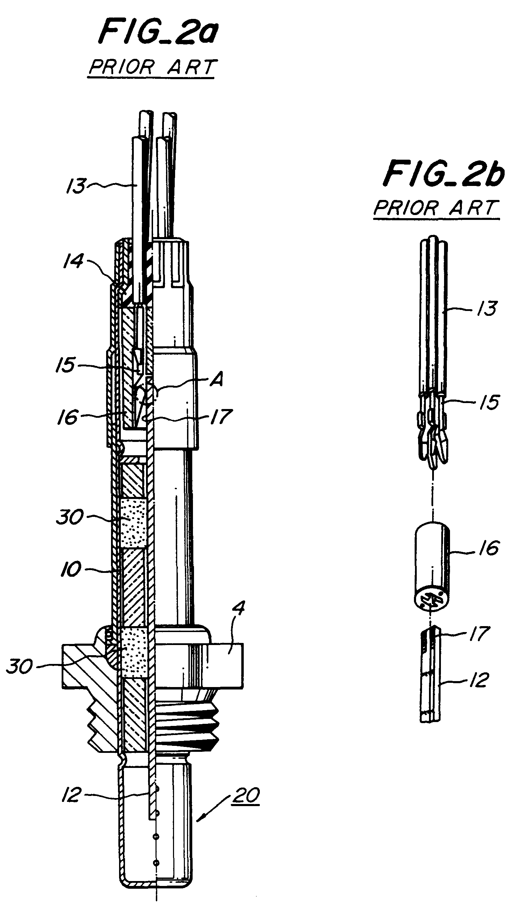

Thus as shown in exploded perspective view in Fig. 2b, the female contacts 15 per se have a resilient function and are accommodated in the ceramic housing 16, the female contacts 15 and the ceramic housing 16 being made integral with each other to form an integral body, and the sensor element 12 is inserted in the integral body to attain electrical connection of the female contacts 15 and the electrode terminal 17 of the sensor element 12 by means of the resilient function of the female contacts 15 per se.

However, this type of oxygen sensor 20 has a drawback in that a high compressive pressure cannot be obtained, so that electrical connection between the electrode terminal 17 and the female contacts 15 becomes unstable, because the electrode terminal 17 and the female contacts 15 are contacted by means of the resilient function of the female contacts 15 per se.

The oxygen sensor 20 has another drawback in that, when inserting the sensor element 12 in the integral body, the plating layer provided on the female contacts 15 which the electrode terminal 17 of the sensor element 12 contacts is rubbed against the end portion and the electrode terminal 17 of the sensor element 12 and peeled off therefrom at a portion A shown in Fig. 2A. As a result, a drawback arises also in that the electrical connection between the female contacts 15 and the electrode terminal 17 becomes bad by fretting corrosion etc., due to vibration and/or humidity during a long period of use of the oxygen sensor.

An object of the present invention is to obviate the above drawbacks.

Another object of the present invention is to provide a gas sensor which assures good electrical connection between the female contacts and the electrode terminal during a long period of use.

The present invention provides a gas sensor, comprising electrodes, a sensor element which for example generates an electromotive force or which changes its electric resistance value between the electrodes depending on oxygen concentration of a gas to be measured, at least one electrode terminal (46) arranged on the sensor element (22) and connected to an electrode, a metallic accommodating member (32) accommodating the sensor element (22) and a socket device (35) receiving the or each respective electrode terminal (46), said or each said socket device comprising an assembly of female contacts (41) for electrically contacting the electrode terminal (46), a ceramic housing (42) electrically insulating the female contacts (41) from the metallic accommodating member (32) at least one resilient member (44) for pressing the ceramic housing (42) against the female contacts (41) and a caulking ring (45) for pressing the resilient member or members (44) in order to exert its or their resilient force, wherein when the caulking ring is caulked to press the resilient member or members (44) the female contacts (41) are pressed by a given pressure into electrical contact with the electrode terminal (46).

By this arrangement, the female contacts can be pressed onto the electrode terminal with a large resilient force by means of the resilient member(s) and the caulking ring, so that the female contacts can be assuredly connected electrically to the electrode terminal. Therefore, the gas sensor of the present invention does not suffer from electrical connection deficiency, such as fretting corrosion, etc., even when it is used for a long period and exposed to vibration and/or humidity, so that good electrical connection can be achieved for a long period of use.

If protrusions are provided on the female contacts for opening the contacting portions of the female contacts which contact with the electrode terminal, the protrusions are contacted with the end portion and the electrode terminal of the sensor element, while the end portion and the electrode terminal of the sensor element are not contacted with the contacting portions, so that a plating layer consisting of, for example, a noble metal is advantageously not peeled off, if the contacting portions have such a plating layer. The plating noble metal layer is preferably made of Au, Ag or Pt.

For a better understanding of the present invention, reference is made to the accompanying drawings, in which:
Fig. 1a is a partial cross-sectional view of an example of a gas sensor according to the invention;
Fig. 1b is an exploded perspective view of an example of the structure of a socket device of a gas sensor according to the invention;
Fig. 2a is a partial cross-sectional view of an example of a prior art oxygen sensor; and
Fig. 2b is an exploded perspective view of an example of the structure of an electrical connection of a prior art oxygen sensor.

In the drawings, 4 is a housing, 10 is a metallic cap, 12 is a sensor element, 13 is lead wires, 14 is a rubber plug, 15 are female contacts, 16 is a ceramic housing, 17 is an electrode terminal, 20 is a gas sensor, e.g. an oxygen sensor, 22 is a sensor element, 26 is an inner cylinder, 32 is an outer cylinder, 35 is a socket device, 41 is a female contact, 42 is a ceramic housing, 43 is a metallic fitting, 44 is a resilient member, 45 is a caulking ring, 46 is an electrode terminal portion, 47 is a protrusion of the female contact 41, and 48 is a plating layer on the contacting portion of the female contact 41.

Hereinafter, the present invention will be explained in detail with reference to Examples.

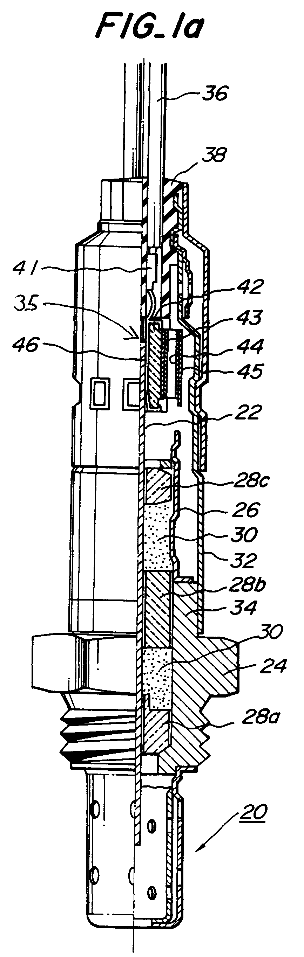

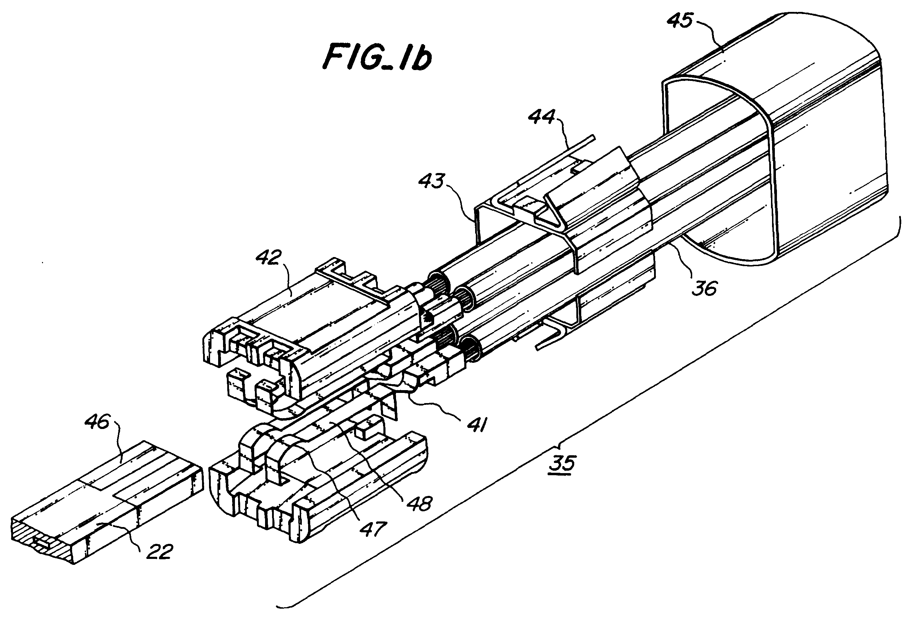

Referring to Figs. 1a and 1b, an oxygen sensor 20 of the present invention has a plate-shaped sensor element 22 whcih is surrounded by a metallic housing 24 and a metallic inner cylinder 26 firmly welded to the metallic housing 24. The sensor element 22 is fixed by means of talc 30 filled between ceramic suppoerts 28a,28b and 28c, and gastightly sealed by the talc 30.

In this embodiment, in order to electrically connect the sensor element to the exterior, an electrode terminal 46 is inserted in a socket device 35 consisting of an assembly of contacts 41 connected to lead wires 36, a ceramic housing 42 divided into two sections,a metallic fitting 43, resilient members 44 and a caulking ring 45, and then the outer circumferential periphery of the caulking ring 45 is caulked, i.e. the caulking ring 45 is compressed radially inwardly, for example by a jig, to exert a force on the resilient members 44 so as to press the female contacts 41 against the electrode terminal 46 with a given pressure, as shown in exploded perspective view in Fig. 1b. The metallic fitting 43 is in one piece and is made of a metal of low rigidity. In this embodiment, desired protusions 47 are provided on the end portions of the female contacts 41, and plating layers 48 made of Au are provided on the contacting portions of the female contacts 41 which will contact with the electrode terminal.

In the oxygen sensor of the above structure, a pressing force per female contact 41 exerted by a resilient member 44, is preferably at least 300 times, more preferably at least 1000 times, the total weight of the socket device 35.

To insert the electrode terminal 46 in the socket device 35, the following procedure is followed. Initially the socket device 35 is arranged with the female contacts 41 in place on respective sections of the ceramic houisng 42, the sections being at this time spaced from each other. The metallic fitting 43 is in position around the ceramic housing 42 and the caulking ring 45 is loosely around the fitting 43. The electrode terminal 46 is then inserted between the female contacts 41, the protrusions 47 causing the contacting portions of the female contacts 41 to open, so that the terminal 46 does not rub against and abrade the plating layers 48 provided on the contacting portions. Hence, peeling off of the plating layers 48 from the contacting portions of the female contacts 41 as the terminal 46 is inserted into the socket device 35 is prevented. After insertion of the electrode terminal 46, the caulking ring 45 is caulked, i.e. tightened by radially inward compression, e.g. by use of a jig, to cause the resilient members 44 to deform the metallic fitting 43, so as to press together in a substantially parallel manner the sections of the ceramic housing 42, thereby pressing the female contacts 41 against the electrode terminal 46. During this pressing, the protrusions 41 of the female contacts 41 are pressed flat, so that the plating layers 48 of the contacting portions come into contact with the terminal 46 in order that electrical connection between the female contacts 41 and the electrode terminal 46 is attained. The sections of the ceramic housing 42 do not meet each other, so that the resilient members 44 continue to apply resilient pressure, holding the plating layers 48 of the contacting portions of the female contacts 41 and the electrode terminal 46 in electrical contact.

In this embodiment, in order to protect the sensor element 22 from the exterior environment, a metallic outer cylinder 32 is fitted to the outer circumferential portion of an upper circular projection 34 of the metallic housing 24, and the lower end of the metallic outer cylinder 32 is welded and gastightly fixed to the outer circumferential portion of the upper circular projection 34 of the metallic housing 24 over the entire circumference of the lower end of the metallic outer cylinder 32. Meanwhile, the upper open end of the metallic outer cylinder 32 remote from the lower end thereof welded to the housing 24, receives a rubber plug 38 having lead wires 36 therein, and caulked to fix the rubber plug 38, so as to seal the outer cylinder 32.

By preventing the peeling off of the plating layers 48 on the surface of the contacting portions of the female contacts 41 which will contact the electrode terminal 46 of the sensor element 22 and by enhancing the pressing power of the contacting portions of the female contacts 41 against the electrode terminal 46 in this way, the drawbacks of electrical connection deficiencies, such as fretting corrosion, etc., can be eliminated, even when the oxygen sensor is exposed to vibrations and/or humidity for a long period of use.

As will be apparent from the foregoing explanations, the gas sensor of the present invention uses a socket device constituted such that the electrical connection between the female contacts and the electrode terminal of the sensor element is achieved by the external pressing action of the resilient member(s), so that a large pressure can be exerted on the female contacts to achieve an ensured electrical connection between the female contacts and the electrode terminal. Therefore, superior electrical connection between the female contacts and the electrode terminal of the sensor element can be attained for a long period without causing an electrical connection deficiency, even when the oxygen sensor is exposed to vibrations and/or humidity for a long period of use.

The invention may be applied to gas sensors other than oxygen sensor.

## Claims

1. A gas sensor comprising electrodes, a sensor element (22), at least one electrode terminal (46) arranged on the sensor element (22) and connected to an electrode, a metallic accommodating member (32) accommodating the sensor element (22) and a socket device (35) receiving the or each respective electrode terminal (46), said or each said socket device comprising an assembly of female contacts (41) for electrically contacting the electrode terminal (46), a ceramic housing (42) electrically insulating the female contacts (41) from the metallic accommodating member (32), at least one resilient member (44) for pressing the ceramic housing (42) against the female contacts (41) and a caulking ring (45) for pressing the resilient member or members (44) in order to exert its or their resilient force, wherein, when the caulking ring is caulked to press the resilient member or members (44), the female contacts (41) are pressed by a given pressure into electrical contact with the electrode terminal (46).

2. The sensor as defined in claim 1, wherein protrusions (47) are provided on the female contacts (41) which will contact the electrode terminal (46).

## Patentansprüche

1. Gassensor bzw. -meßfühler, umfassend Elektroden, ein Sensorelement (22), zumindest einen Elektrodenanschluß (46), der auf dem Sensorelement (22) angeordnet ist und mit einer Elektrode verbunden ist, ein metallisches Aufnahmeelement (32), in dem das Sensorelement (22) untergebracht ist, und eine Buchsenvorrichtung (35), die den oder jeden jeweiligen Elektrodenanschluß (46) aufnimmt, wobei die genannte oder jede genannte Buchsenvorrichtung eine Anordnung aus Kontaktbuchsen (41) zum elektrischen Kontaktieren des Elektrodenanschlusses (46), ein Keramikgehäuse (42), das die Kontaktbuchsen (41) elektrisch vom metallischen Aufnahmeelement (32) isoliert, zumindest ein elastisches Element (44) zum Anpressen des Keramikgehäuses (42) an die Kontaktbuchsen (41) und einen Klemmring (45) zur Druckausübung auf das/die elastische Element oder Elemente (44) umfaßt, damit es seine oder sie ihre elastische Kraft ausübt/ausüben, wobei, wenn der Klemmring in Klemmstellung gebracht ist, um auf das oder die elastische(n) Element oder Elemente (44) zu drücken, die Kontaktbuchsen (41) mit einem bestimmten Druck in elektrischen Kontakt mit dem Elektrodenanschluß (46) gedrückt werden.

2. Sensor nach Anspruch 1, worin Vorsprünge (47) an den Kontaktbuchsen (41) vorgesehen sind, die mit dem Elektrodenanschluß (46) in Kontakt kommen.

## Revendications

1. Un détecteur de gaz comprenant des électrodes, un élément détecteur (22), au moins une borne d'électrode (46) agencée sur l'élément de détecteur (22) et reliée à une électrode, un élément d'adaptation métallique (32) adaptant l'élément détecteur (22) et un dispositif de raccord (35) recevant la où chaque borne d'électrode respective (46), le où chaque dispositif de raccord comprenant un ensemble de contacts femelles (41) pour contacter électriquement la borne d'électrode (46), un boîtier en céramique (42) isolant électriquement les contacts femelles (41) de l'élément d'adaptation métallique (32), au moins un élément élastique (44) pour presser le boîtier en céramique (42) contre les contacts femelles (41) et un anneau de matage (45) pour presser le ou les éléments élastiques (44) afin d'exercer sa ou leur force élastique, dans lequel, lorsque l'anneau de matage est maté pour presser le ou les éléments élastiques (44), les contacts femelles (41) sont pressés par une pression donnée en contact électrique avec la borne d'électrode (46).

2. Le détecteur selon la revendication 1, dans lequel des saillies (47) sont prévues sur les contacts femelles (41) qui contacteront la borne d'électrode (46).
